# EUROPÄISCHE PATENTSCHRIFT

(11) **EP 2 044 359 B1**
(45) Veröffentlichungstag und Bekanntmachung des Hinweises auf die Patenterteilung: **02.12.2009**
(21) Anmeldenummer: 07787178.8
(22) Anmeldetag: 06.07.2007
(51) Int. Cl.: F16L 13/14, F16L 33/207

(54) **HÜLSE UND KOMBINATION VON HÜLSE MIT PRESSWERKZEUG**
SLEEVE, AND COMBINATION OF A SLEEVE AND A PRESSING TOOL
MANCHON ET COMBINAISON DE MANCHON AVEC UN OUTIL DE MOULAGE PAR COMPRESSION

(30) Priorität: 20.07.2006 DE 102006034101
(43) Veröffentlichungstag der Anmeldung: 08.04.2009
(73) Patentinhaber: Postler, Stefan, 97461 Hofheim (DE)
(72) Erfinder: POSTLER, Stefan, 97461 Hofheim (DE)
(74) Vertreter: Rieder, Hans-Joachim
(86) Internationale Anmeldenummer: PCT/EP2007/056896
(87) Internationale Veröffentlichungsnummer: WO 2008/009573

(56) Entgegenhaltungen:
- EP-A- 1 063 462
- WO-A-03/012328
- WO-A-03/064912
- DE-A1- 19 828 141
- DE-C1- 10 010 573

## Beschreibung

Die Erfindung betrifft eine Hülse, insbesondere einen Pressfitting, wobei die Hülse mindestens zwei umlaufende Nuten zur Aufnahme je einer Dichtung und zumindest einen Abstützbereich zur radialen Abstützung eines darauf befestigbaren Hohlelements aufweist.

Zum Stand der Technik ist auf die EP 1489344 A2 zu verweisen. Hieraus ist ein Pressfitting mit zwei umlaufenden Nuten zur Aufnahme von Dichtungsringen bekannt. Das zum Befestigen eines Rohre vorgeschlagene Presswerkzeug besitzt mehrere Pressrippen. Es wird offenbart, dass sich zum Eindrücken der O-Ringe beim Verpressen eine der Pressrippen zufolge der axialen Ausrichtung des Presswerkzeuges axial unmittelbar über einem O-Ring befindet, während dem benachbarten O-Ring eine dazu axial in gewissem Maß versetzte Pressrippe zugeordnet ist, um auch bei gewissen Toleranzen eine zuverlässige Verformung zumindest eines O-Ringes zu erreichen. Dadurch, dass jedenfalls eine der Rippen in Überdeckung zu dem ersten oder zweiten O-Ring ausgebildet ist, eignet sich der dort beschriebene Fitting auch besonders beim Auftreten von Toleranzen in Längs- bzw. Axialrichtung.

Gattungsgemäße Pressfittings sind auch aus WO03/012 328 und EP 1 063 462 bekannt.

Die Erfindung beschäftigt sich mit der Aufgabe, eine Hülse, insbesondere einen Pressfitting, anzugeben, der auch unter Berücksichtigung von radialen Toleranzen möglichst zuverlässig zu einem zufriedenstellenden Verpressergebnis führt.

Hierzu schlägt die Erfindung den Gegenstand von Anspruch 1 vor, wobei darauf abgestellt wird, das benachbart zu zumindest zwei Nuten je eine von der jeweiligen Nut durch einen axialen Zwischenbereich beabstandete Profilaussparung vorgesehen ist, wobei in Bezug auf zumindest zwei Profilbereiche, die je eine Nut, einen Zwischenbereich und eine Profilaussparung aufweisen, jeweils die größte radiale Erstreckung des axialen Zwischenbereiches größer als die kleinste radiale Erstreckung der Profilaussparung und kleiner als die größte radiale Erstreckung des Abstützbereiches ist, wobei bei einer bevorzugten rotationssymmetrischen Ausgestaltung anstelle von radialer Erstreckung in einer zur Längsmittellinie senkrechten Radialrichtung auch, jeweils von Außendurchmesser gesprochen werden kann. Die an der Hülse, welche bezüglich ihrer Bedeutung zum Aufpressen eines Hohlelements, wie eines Rohres oder Schlauches, auch als Stützhülse zu bezeichnen ist, vorgesehenen Profilaussparungen stehen als Aufnahmeraum für das von den Pressrippen eines Presswerkzeuges verformte Wandmaterial des Rohres bzw. Schlauches zur Verfügung. Überraschend wurde gefunden, dass die bei der Eindrückung der Wand in die Profilaussparungen ablaufenden Verformungs- und Fließvorgänge im Wandmaterial eine auch im Hinblick auf von radiale Toleranzen günstige Beeinflussung der Verformung der Dichtungen ermöglicht. Es besteht zu diesem Zweck die Möglichkeit, den quer zur Umfangsrichtung liegenden Querschnitt bzw. die Kontur der Profilaussparung praktisch unabhängig von der durch die Dichtung selbst bereits weitgehend vorgegebenen Querschnittskontur der Dichtungs-Nut zu wählen und ggf. sogar auf den Querschnitt der Pressrippen abzustimmen. So kann beispielsweise die Profilaussparung einen etwa kreissegmentartigen oder bspw. ellipsensegmentartigen Querschnitt besitzen, auch wenn die Dichtungs-Nut bspw. rechteckig oder quadratisch ist. Auch besteht die Möglichkeit, dass die Profilaussparung im Vergleich zur Nut eine größere axiale und dafür eine geringere radiale Erstreckung aufweist. Erfindungsgemäß weisen zumindest zwei Profilbereiche, die je eine Nut, einen Zwischenbereich und eine Profilaussparung aufweisen, ein zueinander gleiches oder im Wesentlichen gleiches Profil auf, wodurch eine vergleichsweise einfache Herstellung möglich ist. Die benachbarte Lage zweier solcher Profilbereiche bewirkt, dass eine der beiden Nuten bzw. Dichtungen zwischen zwei zu diesen Profilbereichen gehörenden Profilaussparungen liegt. Die Wand eines an der Stützhülse zu befestigenden Hohlelements (bspw. Rohr) wird folglich beim Verpressen zu beiden Seiten der Dichtungsnut von den Pressrippen in die Profilaussparungen hineingepresst, so dass sich in ihrem axialen Zwischenraum eine gewünschte Spannung des Rohrwandbereichs gegen die Dichtung ergibt. Um dies auch für die zweite Dichtung zu ermöglichen, wird zusätzlich zu den zumindest zwei Profilbereichen, die je eine Nut, einen Zwischenbereich und eine Profilaussparung aufweisen, auf der den Profilaussparungen der Profilbereiche abgewandten Seite einer Nut eine Zusatz-Profilaussparung vorgesehen. Ein erster axialer Abstand, insbesondere ein erster axialer Mittenabstand, zwischen einer Profilaussparung, insbesondere der Zusatz-Profilaussparung, und einer benachbarten Profilaussparung eines Profilbereichs weicht ab von einem zweiten axialen Abstand, insbesondere von einem zweiten axialen Mittenabstand, zwischen zwei Profilaussparungen benachbarter Profilbereiche, wobei insbesondere der zweite Mittenabstand größer, insbesondere um etwa 10 % größer als der erste Mittenabstand ist. Insbesondere können die Querschnitte, in welchen die Profilaussparungen am tiefsten sind, in unterschiedlichen axialen Abständen liegen. Wie nachfolgend noch beschrieben, eröffnet dies in Verbindung mit einem Presswerkzeug, dessen Pressrippen axial gleichmäßig beabstandet sind, die Möglichkeit, beim Verpressen einen gezielten axialen Versatz einer oder einzelner Pressrippen zur Mitte der zugeordneten Profilaussparung bzw. zu deren Muldenscheitel vorzugeben, während andere Pressrippen mittig auf deren zugeordnete Profilaussparung bzw. deren Muldenscheitel treffen können. Durch einen solchen axialen Versatz werden die Verformungs- und Fließvorgänge in der aufgepressten Wand nicht nur im Bereich der Profilaussparung selbst, sondern durch den vor dem Verpressen zunächst einen Spalt belassenden axialen Zwischenbereich hinweg auch bis zu der Dichtung beeinflusst. Ein axialer Versatz zwischen Pressrippe und Profilaussparung wird so gleichsam in eine Änderung der radialen Stauchung der Dichtung transformiert, was sich gemäß der Erfindung in gezielter Weise dazu ausnutzen lässt, um eine von Nut zu Nut abgestufte, d. h. unterschiedlich starke Verpressung der Dichtungen, bspw. von O-Ringen, zu erreichen. Alternativ oder kombinativ besteht die Möglichkeit, dass die axialen Zwischenbereiche zumindest zweier Profilbereiche zueinander unterschiedlich große maximale radiale Erstreckungen bzw. Durchmesser aufweisen, wobei diese radialen Erstreckungen jeweils kleiner als die radiale Erstreckung bzw. Durchmesser eines Abstützbereiches sind. Auch durch diese Maßnahme können die für die Stauchung des Dichtringes verantwortlichen Verformungs- und Fließvorgänge in dem aufgepressten Wandbereich beeinflusst werden.

Erfindungsgemäß geht eine Seitenwand der Nut in einen axialen Zwischenbereich und die andere Seitenwand der Nut in einen Abstützbereich über, wobei die radiale Erstreckung bzw. der Außendurchmesser des Abstützbereichs größer als die radiale Erstreckung bzw. der Außendurchmesser des axialen Zwischenbereichs ist. Dadurch, dass bei vorzugsweise geradem Nutboden eine unterschiedliche Höhe der Nutwände gegeben ist, ist die Öffnungsweite der Nut, bei Verbindung der beiden oberen Scheitel der Nutwände, größer als es der Breite der Nut entspricht. Eine Verdrängung von Material in die Dichtungsnut beim Verpressen ist daher besser möglich. Bei einem Abstützbereich kann es sich im Rahmen der Erfindung um einen Bereich der Hülse handeln, der einen im Vergleich zu den Profilaussparungen und axialen Zwischenbereichen größeren Durchmesser aufweist, so dass sich ein auf der Hülse zu befestigendes Hohlelement (bspw. ein Rohr) zunächst hierauf, wenn auch je nach konkreter Abmessung zunächst bei einem gewissen Bewegungsspiel, radial abstützen lässt. Insofern kommt als Abstützbereich innerhalb des axialen Überlappungs- bzw. Verpressbereichs insbesondere der Bereich mit dem größten Durchmesser in Betracht. Bevorzugt ist auch, dass in Aufschieberichtung eines an der Hülse zu befestigenden Hohlelements die Zusatz-Profilaussparung die erste, d. h. die beim Aufschieben z. B. eines Rohres von diesem zuerst überdeckte, Profilaussparung ist. Auch ist bevorzugt, dass der an die eine Seitenwand der Nut angrenzende Abstützbereich in einem axialen Mittenbereich eine radiale Einschnürung aufweist, deren radiale Erstreckung bzw. deren Außendurchmesser insbesondere größer als die geringste radiale Erstreckung der Profilaussparung ist. Wenn der Außendurchmesser des oder der Abstützbereiche im Wesentlichen gleich dem Innendurchmesser eines aufzupressenden Rohrelementes ist, kann das Rohrelement bereits beim Aufschieben mit leichter Spiel- oder Übergangspassung mit den Abstützbereichen in Berührung treten, wobei durch die Abstützung eine Zentrierung möglich ist. Zu diesem Zweck genügt bereits eine in Längsrichtung punktuelle Abstützung, wobei sich durch die besagten Einschnürungen in gewünschter Weise der Aufschiebe-Widerstand verringern lässt. Eine zweckmäßige Weiterbildung kann auch darin liegen, dass sich die Zusatz-Profilaussparung an dem in Aufschieberichtung eines Hohlelements vorderen Ende nur bis zu einer Profilerhöhung verengt, deren radiale Erstreckung (bzw. deren Außendurchmesser) gleich oder im Wesentlichen gleich der radialen Erstreckung der Einschnürungen ist. Dies erleichtert durch das anfangs größere Bewegungsspiel das Aufschieben des Höhlelements auf die Hülse. Außerdem wird die Gefahr verringert, dass es im verpressten Zustand bei einer Biege- oder Scherbeanspruchung zwischen Hülse und Rohrelement dort zu Beschädigungen kommt. Bezüglich der Profilaussparungen selbst ist bevorzugt, dass diese in einem Querschnitt quer zur Umfangsrichtung einen gerundeten Bodenverlauf mit zu den Rändern abnehmender Tiefe, d. h. einen bzgl. der Hülse im wesentlichen konkaven Profilverlauf aufweisen, wobei der Bereich der größten Tiefe bzw. der Muldenscheitel vorzugsweise in zumindest etwa axialer Mitte der Profilaussparung liegen und von dort die Tiefe zu den Rändern hin im Wesentlichen symmetrisch abnehmen kann. Als Bezugsmaß für die Tiefe kann der Radius bzw. das Niveau der Abstützbereiche dienen. Bevorzugt ist, dass sich die Profilaussparungen der Profilbereiche bei Betrachtung in Aufschieberichtung des Hohlelementes von jeweils einem axialen Zwischenbereich bis zu einem Abstützbereich erstrecken. Da in den axialen Zwischenbereichen eine gewisse Tiefe erhalten bleibt, setzt sich die in den Profilaussparungen durch die Pressrippen verursachte Wandverformung des Hohlelements durch die axialen Zwischenbereiche bis zu der in der Nut einliegenden Dichtung fort. Bevorzugt ist, dass in Aufschiebe- bzw. Längsrichtung die Profilaussparung so breit wie oder breiter als die Dichtungsnut ist und/oder dass die Tiefe der Dichtungsnut das 1,5- bis 2-Fache der maximalen Tiefe der Profilaussparung beträgt.

In den Rahmen der Erfindung fällt auch eine Kombination einer Hülse, insbesondere eines Pressfittings, mit einem Pressbacken aufweisenden Werkzeug, wobei die Hülse mindestens zwei umlaufende Nuten zur Aufnahme je eines Dichtungsringes und zumindest einen Abstützbereich zur radialen Abstützung eines darauf befestigbaren Hohlelements aufweist und wobei an dem Presswerkzeug im Pressbereich mindestens zwei in Umfangsrichtung orientierte Pressrippen ausgebildet sind. Zum Stand der Technik wird auch insofern auf EP 1489344 A2 Bezug genommen. Wie schon ausgeführt, stellt die dortige Lehre darauf ab, dass jedenfalls eine der Pressrippen in Überdeckung zu einer der beiden Dichtungsnuten angeordnet ist, während eine weitere Pressrippe im Hinblick auf evtl. auftretende Toleranzen einen zu der zweiten Dichtungsnut nur geringfügigen axialen Versatz besitzt. Insbesondere bezüglich der dort als Dichtungen vorgeschlagenen O-Ringe besteht aber allgemein die Schwierigkeit, dass diese Dichtungen zur Erzielung einer zuverlässigen Dichtwirkung beim Verpressen zwar gestaucht werden müssen, diese Stauchung aber für einen dauerelastischen Einsatz häufig nur etwa 15 bis 30 % des Ausgangsdurchmessers betragen darf. Je nach Anwendung können aber bereits die im System Hülse bzw. Pressfitting, Hohlelement (wie bspw. Rohr, Schlauch usw.), Presshülse und Presswerkzeug auftretenden radialen Toleranzen in diesem Größenbereich oder gegebenenfalls sogar darüber liegen. Die Erfindung verfolgt insofern auch die Zielsetzung, eine Kombination aus einer Hülse, vorzugsweise aus einem Verpressfitting, und einem Presswerkzeug anzugeben, die auch unter Berücksichtigung von radialen Toleranzen möglichst zuverlässig zu einem zufriedenstellenden Verpressergebnis führt. Sie schlägt dazu vor, dass bei einer solchen Kombination eine Hülse, die einzelne oder mehrere der zuvor beschriebenen Merkmale aufweist, vorgesehen ist, dass die axiale Breite des Pressrippenquerschnitts quer zur Umfangsrichtung zumindest am radial inneren Ende kleiner als die axiale Breite der Profilaussparung ist und dass Ausrichthilfsmittel vorgesehen sind zur axialen Lagezuordnung von Presswerkzeug und Hülse derart, dass zumindest zwei Pressrippen zumindest mit ihrem radial inneren Ende jeweils in axiale Überdeckung zu je einer Profilaussparung treten. Ein wesentlicher Unterschied gegenüber der aus EP 1498344 A2 bekannten Lösung liegt somit darin, dass die Pressrippen nicht mehr in praktisch unmittelbarer axialer Überdeckung zu den Dichtungen liegen, sondern die Verformung der Dichtungen quasi mittelbar durch eine Eindrückung des Hohlelements beabstandet in neben den Dichtnuten angeordnete Profilaussparungen entsteht. Eine solche erfindungsgemäße Kombination bietet vorteilhafte Möglichkeiten, die Zuverlässigkeit der Abdichtung insbesondere auch bei auftretenden radialen Toleranzen zu verbessern. In diesem Zusammenhang weicht der axiale Abstand, vorzugsweise der axiale Mittenabstand, der zumindest zwei Pressrippen des Presswerkzeuges ab von dem axialen Abstand, vorzugsweise von dem axialen Mittenabstand, von zumindest zwei Profilaussparungen zweier benachbarter Profilbereiche der Hülse. Erfindungsgemäß ist an eine solche axiale Ausrichtung von Presswerkzeug zu Hülse gedacht, dass eine Pressrippe mittig zu einer Profilaussparung und eine weitere Pressrippe außermittig zu einer Profilaussparung mit dem radial inneren Ende in Überdeckung tritt. Der Begriff mittig bedeutet hier wie auch im Folgenden nicht notwendig exakt mittig, sondern lässt durchaus gewisse, auch im Rahmen der üblichen Ansetzgenauigkeit von Presswerkzeugen mögliche Toleranzen zu. Insofern ist ausreichend, dass sich in gezielter Weise bei einer der Profilaussparungen ein vergleichsweise größerer axialer Mittenversatz zu der zugeordneten Pressrippe erreichen lässt. Je nach Muldenprofil der Profilaussparung steht im Bereich dieser Pressrippe eine geringere Muldentiefe zum Hineinpressen der Wandung des Hohlelements zur Verfügung. Bei einem bevorzugten, im Wesentlichen oder etwa mittensymmetrisch konkaven Bodenverlauf nimmt die dazu verfügbare Profiltiefe mit zunehmendem axialem Versatz der Pressrippe gegenüber der Muldenmitte ab. Unter Berücksichtigung dessen, dass die axial beabstandeten Pressrippen des Presswerkzeuges beim Verpressen in der Regel in gleichem Ausmaß nach radial innen verlagert werden, wird die Wand des Hohlelements durch eine Pressrippe, welche einen axialen Mittenversatz gegenüber der zugeordneten Profilaussparung aufweist, vergleichsweise stärker gestaucht als ein Wandbereich durch eine Pressrippe ohne Mittenversatz. Die unterschiedlich starke Stauchung im Bereich der Profilaussparungen setzt sich über die axialen Zwischenbereiche, in welchen im unverpressten Zustand ein Spalt zu der Innenwand des Hohlelements verbleibt, bis zu den in den Nuten einliegenden Dichtungen fort und resultiert auch dort in gewünschter Weise in einer unterschiedlich starken Verpressung. Die Erfindung nutzt dies insoweit aus, als sich durch einen bestimmten axialen Versatz einer Pressrippe zu ihrer Profilaussparung auch in gewünschtem Umfang eine gegenüber einem benachbarten Dichtring geänderte Stauchung, d. h. eine von Dichtung zu Dichtung abgestufte Stauchung, erreichen lässt. Die Abstufung kann vorzugsweise so gewählt sein, dass im Fall des Auftretens der maximal möglichen radialen Toleranzen ein erster Dichtring um die gewünschten 15 bis 30 % eingedrückt wird, während ein zweiter Dichtring dann ggf. zu schwach verformt wird, und dass im Fall des Auftretens der kleinsten möglichen radialen Toleranzen der zweite Dichtring um die gewünschten 15 bis 30 % eingedrückt wird, während der erste Dichtring ggf. zu stark verformt wird. Bevorzugt kann der vergleichsweise schwächer verformte Dichtring in Aufschieberichtung des Hohlelements vor dem vergleichsweise stärker gestauchten Dichtring liegen, so dass die Stauchung in Aufschiebrichtung von Dichtung zu Dichtung schrittweise zunimmt. Auf diese Weise lässt sich gewährleisten, dass in dem zu erwartenden radialen Toleranzbereich zumindest eine von zwei Dichtungen in dem für einen dauerelastischen Einsatz erforderlichen Umfang verformt wird. In diesem Zusammenhang ist auch bevorzugt, dass die Profilaussparung quer zur Umfangsrichtung ein Profil aufweist, welches einen etwa symmetrischen Verlauf bezüglich einer zu der Längs- bzw. Axialrichtung senkrechten Symmetrieebene aufweist. Bevorzugt ist außerdem, dass die weitere Pressrippe auf die zugeordnete Profilaussparung mit einem axialen Mittenversatz trifft, der ausgehend von der besagten Mitte der Profilaussparung in Richtung zu der Nut des Profilbereiches hin gerichtet ist. Beispielsweise kann in Axial- bzw. Längsrichtung die axiale Erstreckung des Mittenversatzes etwa ein Fünftel der Breite der Profilaussparung und/oder etwa die Hälfte der Nutbreite und/oder etwa das Doppelte der Breite des axialen Zwischenbereiches betragen. Es versteht sich allerdings, dass die Erfindung auch Größenverhältnisse einschließt, die von den hier lediglich beispielhaft genannten Angaben abweichen. Es besteht auch die Möglichkeit, dass das Presswerkzeug eine Pressrippe aufweist, die zufolge der axialen Ausrichtung des Presswerkzeuges vorzugsweise mittig mit der Zusatz-Profilaussparung in Überdeckung tritt. Als zweckmäßig wird im Hinblick auf eine Standardisierung der Werkzeuge auch angesehen, dass jeweils benachbarte Pressrippen gleichen axialen Mitten-Abstand besitzen und dass dieser Mitten-Abstand gleich dem axialen Mitten-Abstand zwischen der Zusatz-Profilaussparung und einer dazu benachbarten Profilaussparung eines Profilbereiches ist. Hinsichtlich der Pressrippen ist bevorzugt auch daran gedacht, dass deren radiale Bauhöhe etwa gleich oder etwas größer als die Differenz zwischen der kleinsten radialen Erstreckung der Profilaussparungen (Scheitel der Profilmulde) und der größten radialen Erstreckung (Außenradius) des Abstützbereiches ist. Um eine gewünschte axiale Ausrichtung der Pressrippen zu den Profilaussparungen zu gewährleisten, kann eine Presshülse vorgesehen sein, die einen in Aufschieberichtung auf die Hülse vorderen Bund zur formschlüssigen Anlage an einem Absatz der Hülse aufweist und die an ihrem Außenmantel zumindest zwei Vorsprünge aufweist, deren Abstand an die Breite der Pressbacken zur axialen Ausrichtung im Wege einer mehr oder minder formschlüssigen Aufnahme angepasst ist. Bei einer bevorzugten Ausgestaltung ist vorgesehen, dass der radiale Abstand zwischen der Innenwand der Presshülse und dem Außenradius des Abstützbereiches zur Aufnahme eines Hohlelements, wie insbesondere eines Aluminium-Verbundrohres oder eines Kunststoffrohres, von etwa entsprechender Wandstärke so bemessen und derart auf das Presswerkzeug, insbesondere auf die radiale Eindringtiefe der Pressrippen, und auf die Form der Profilaussparungen abgestimmt ist, dass die Wandstärke des Hohlelements beim Verpressvorgang im Bereich der außermittig auf die Profilaussparung treffenden Pressrippe vergleichsweise stärker, insbesondere um etwa 20 bis 25 % der Ursprungswandstärke, und im Bereich der mittig auf die Profilaussparung treffenden Pressrippe vergleichsweise weniger, vorzugsweise um maximal etwa 15 % der Ursprungswandstärke, in Radialrichtung gestaucht wird. Vorzugsweise kann dabei der in Aufschieberichtung des Hohlelements erste Dichtring schwächer als der nachfolgende gestaucht werden. Es besteht die Möglichkeit, dass in die Nuten als Dichtung je zumindest ein O-Ring eingesetzt ist, dessen Profildurchmesser gleich oder größer als die Radiendifferenz zwischen dem Nutgrund und dem Außenradius des axialen Zwischenbereiches ist. Auch ist bevorzugt, dass der O-Ring im Außendurchmesser nur soviel größer ist als der kleinste Rohrinnendurchmesser, dass bei einem Überdruck von kleiner gleich 6,5 bar im unverpressten Zustand eine Undichtigkeit auftritt. Wenn ein System bei der DVGW-Zulassung nach Arbeitsblatt W 534 als "Verbinder mit Zwangsundichtigkeit" deklariert wird, muss eine Undichtigkeit im unverpressten Zustand zwischen einem und 6,5 bar auftreten. Diese Anforderung kann durch die genannte bevorzugte Ausgestaltung erfüllt werden. Bezüglich der Stützhülse ist bevorzugt, dass diese aus einem im Vergleich zu der Hülse leichter deformierbaren Material, vorzugsweise aus weichgeglühtem Metall, hergestellt ist. Hinsichtlich der Pressrippen wird im Rahmen der Erfindung als zweckmäßig angesehen, dass diese einen sich nach radial innen verjüngenden Trapezquerschnitt aufweisen, der die Vorteile hoher Stabilität und eines im Vergleich zur Breite der Profilaussparungen schlanken radial inneren Endes kombiniert.

Die Erfindung wird nachfolgend mit Bezug auf die beigefügten Figuren, welche ein bevorzugtes Ausführungsbeispiel zeigen, weiter beschrieben. Darin zeigt:
- Fig. 1: eine bevorzugte Ausführungsform der erfindungsgemäßen Hülse und ihrer erfindungsgemäßen Kombination mit einem Presswerkzeug in einem Längsschnitt, vor dem Verpressen;
- Fig. 2: den Detailausschnitt II in Fig. 1 in Vergrößerung;
- Fig. 3: die in Fig. 1 gezeigte Anordnung, jedoch nach dem Verpressen und
- Fig. 4: den Detailausschnitt IV in Fig. 3 in Vergrößerung.

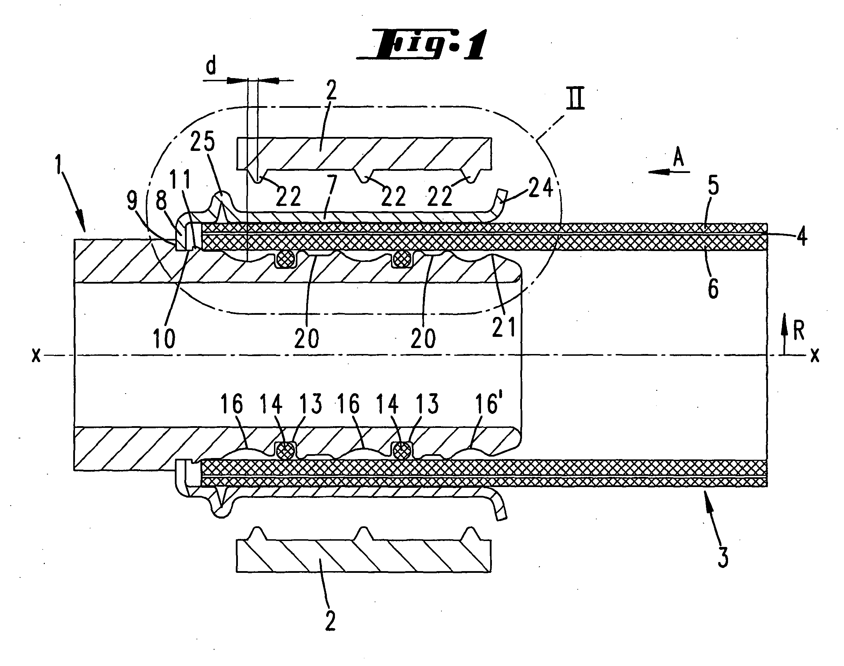

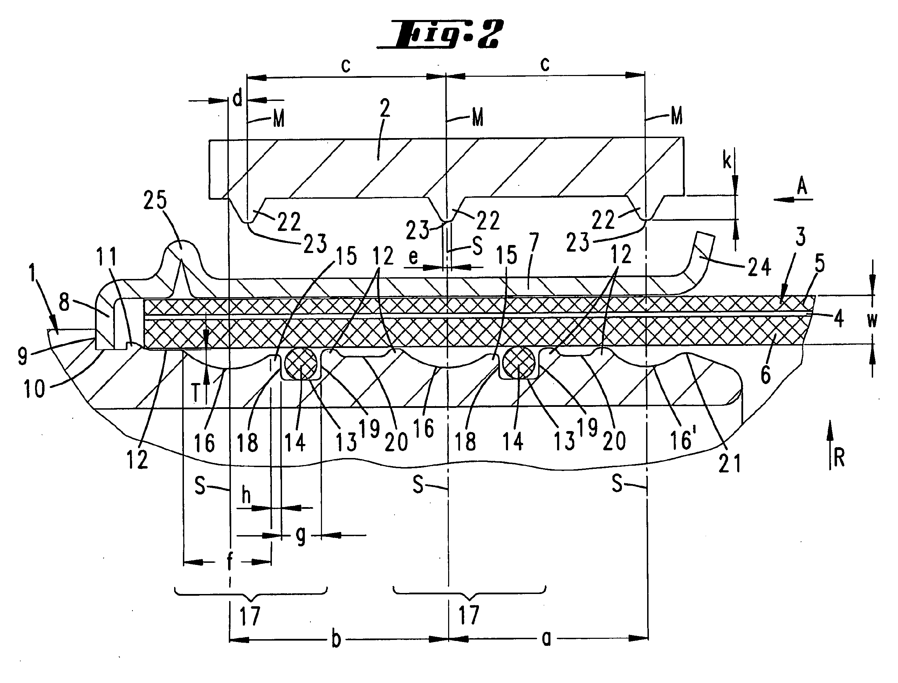

Die Figuren 1 bis 4 zeigen in einem durch die Mittellinie x - x gelegten Längsschnitt eine bevorzugte Ausführungsform der erfindungsgemäßen Hülse 1 sowie eine bevorzugte Ausführungsform ihrer erfindungsgemäßen Kombination mit einem Pressbacken 2 aufweisenden Presswerkzeug (welches im Übrigen nicht weiter dargestellt ist). Das in Blickrichtung linke Ende der Hülse 1 kann, wie dargestellt, eine Stirnseite bilden und je nach Verwendung geeignet an einem weiteren Bauelement, wie bspw. einem Rohr oder Behälter, befestigbar sein. Das besagte Ende kann dazu bspw. angeschweißt oder mittels eines (nicht dargestellten) Gewindes verschraubt werden. Alternativ kann sich in einer Ausgestaltung als Pressfitting an dem in Blickrichtung linken Ende auch noch ein Mehrkantprofil zum Ansetzen eines Schraubenschlüssels und im Weiteren ein Gewindeabschnitt anschließen. Der in den Figuren auch in näherer Einzelheit gezeigte rechte Längenabschnitt der Hülse 1 dient zur überlappenden Befestigung eines Hohlelements 3 mittels einer gedichteten Pressverbindung. In dem gezeigten Beispiel handelt es sich bei dem Hohlelement 3 um ein sog. Aluminium-Verbundrohr, das aus einem Aluminiumrohr 4 und darauf außen- und innenseitig aufgeklebten Kunststoffrohren 5, 6 gebildet ist. Zur Vorbereitung der Pressverbindung wurde gemäß Figuren 1 und 2 auf die zu der Mittelachse x - x rotationssymmetrische Hülse 1, die auch als Stützhülse bezeichnet wird, zunächst eine Presshülse 7 in Aufschieberichtung A aufgeschoben bis zur Anlage ihres vorderen Bundes 8 gegen einen Anschlag 9 der Hülse 1. Der Bund 8 wird in dem gewählten Beispiel aus einer Mehrzahl von in Umfangsrichtung verteilt liegenden Abwinklungen gebildet, die sich von dem Hülsenmantel nach radial innen erstrecken. Hinsichtlich einer derartigen möglichen Ausgestaltung und die sich daraus ergebenden Vorteile wird auf EP 1489344 A2, insbesondere deren Figuren 2 bis 4 mit zugehöriger Beschreibung, Bezug genommen und diese Offenbarung auch mit in den Inhalt der vorliegenden Anmeldung aufgenommen, auch zu dem Zweck, entsprechende Merkmale in Ansprüche aufnehmen zu können. Der Anschlag 9 ist Bestandteil einer Schulter, die in einen zylindrischen Abschnitt 10 zur radialen Abstützung übergeht. Diesem vorgelagert befindet sich ein Ringvorsprung 11 von im Vergleich zu dem Anschlag 9 geringer radialer Erstreckung. Dieser bildet eine in Aufschieberichtung A ansteigende vordere Flanke aus, wodurch sich der Ringvorsprung 11 beim Aufschieben der Presshülse 7 unter gewisser, vorzugsweise elastischer Aufweitung des Bundes 8 überlaufen lässt und sodann eine Verliersicherung bildet. In den zwischen der Presshülse 7 und der Hülse 1 gebildeten radialen Zwischenraum ist die Wand des auf der Hülse 1 zu befestigenden Rohres 3 in Aufschieberichtung A bis zur axialen Anlage gegen den Ringvorsprung 11 aufgeschoben worden. Die geometrischen Besonderheiten des gebildeten Überlappungsbereiches werden näher mit Bezug auf Figur 2 beschrieben. Die Hülse 1 bildet dort einen rotationssymmetrisch in Längsrichtung x - x profilierten Außenmantel aus. Dort befinden sich axial beabstandet mehrere sog. Abstützbereiche 12, welche zueinander den gleichen und im Verhältnis zu dem übrigen Profil des Überlappungsbereiches den größten Profilaußendurchmesser haben. Dieser entspricht nahezu dem Innendurchmesser des noch unverformten Rohres 3, so dass sich dieses beim Aufschieben an den Bereichen 12 ggf. unter gewissem Spiel radial abstützen und zentriert aufschieben lässt. Die gezeigte Hülse 1 besitzt zwei umlaufende Nuten 13 zur Aufnahme je einer Dichtung 14, bei der es sich jeweils um einen O-Ring handelt. Benachbart zu jeder dieser beiden Nuten 13 ist eine davon durch einen axialen Zwischenbereich 15 beabstandete Profilaussparung 16 vorgesehen. Es ist insofern von zwei Profilbereichen 17 zu sprechen, die jeweils eine Nut 13, einen axialen Zwischenbereich 15 und eine Profilaussparung 16 aufweisen. Bezogen auf jeden Profilbereich 17 ist der größte Außendurchmesser des Zwischenbereiches 15 größer als der kleinste Außendurchmesser der Profilaussparung 16 und kleiner als der größte Außendurchmesser der Abstützbereiche 12. Die Profilaussparungen 16 besitzen einen konkav gerundeten Bodenverlauf mit bezüglich ihrer Symmetrielinien S zu den Rändern hin nahezu symmetrisch abnehmender Tiefe T. Die größte Tiefe liegt somit an dem in Axialrichtung etwa mittigen Muldenscheitel vor. Den Nuten 13 und den Profilaussparungen 16 in Aufschieberichtung A vorgelagert ist eine Zusatz-Profilaussparung 16', die ebenfalls zu einer mittigen Symmetrielinie S nahezu symmetrisch muldenartig ausgerundet ist. Der axiale Abstand a von der mittigen Symmetrielinie S der Zusatz-Profilaussparung 16' zu der mittigen Symmetrielinie S der mittleren Profilaussparung 16 ist etwas kleiner als der sich von dort anschließende axiale Abstand b bis zu der mittigen Symmetrielinie S der in Aufschieberichtung A hintersten Profilaussparung 16. In dem gewählten Beispiel fällt das Maß a in Bezug auf das Maß b um etwa 10 % geringer aus. Betreffend die Nuten 13 ist vorgesehen, dass ihre eine, in Aufschieberichtung A hintere Seitenwand 18 in einen axialen Zwischenbereich 15 und dass ihre gegenüberliegende, d. h. in Aufschieberichtung A vordere Seitenwand in einen Abstützbereich 12 jeweils leicht gerundet übergeht. Mit den zuvor beschriebenen Durchmesserverhältnissen bedeutet dies, dass bei ebenem Boden der Nut 13 die Seitenwände 19 höher als die Seitenwände 18 sind. Der an die in Aufschieberichtung A vordere Seitenwand 19 der Nuten 13 angrenzende Abstützbereich 12 besitzt jeweils in einem axialen Mittenbereich eine radiale Einschnürung 20 zur Verringerung des Aufschiebewiderstandes. Die Einschnürungen 20 besitzen im Beispiel den gleichen Durchmesser wie eine Profilerhöhung 21, bis zu der sich die Zusatz-Profilaussparung 16' in Richtung zu ihrem freien vorderen Ende der Hülse 1 verengt. In dem beschriebenen Profil nehmen die Außendurchmesser von Muldenscheiteln der Profilaussparungen 16, 16', axialen Zwischenbereichen 15, Einschnürungen 20 bzw. Profilerhöhung 21 und Abstützbereichen 12 in der hier genannten Reihenfolge zu. Im gewählten Beispiel beträgt, ausgehend von dem Bezugsniveau der Abstützbereiche 12, die Tiefe T der Profilaussparungen 16, 16' etwa das 2,5-Fache der Tiefe der axialen Zwischenbereiche 15. In Axialrichtung x - x besitzen die Profilaussparungen 16 im Verhältnis zu den axialen Zwischenbereichen 15 die etwa 10-fache Breite. Betreffend die Nuten 13 beträgt die Höhe der Seitenwände 18 das etwa 0,75-Fache der Höhe der Seitenwände 19. Bezüglich der Nuten 13 besitzen die Profilaussparungen 16 die etwa doppelte Breite. Die vorgenannten Verhältnisse verstehen sich jedoch lediglich beispielhaft, d. h. die Erfindung kann auch mit davon abweichenden geometrischen Verhältnissen verwirklicht werden.

Bei dem gewählten Ausführungsbeispiel ist der Abstützbereich 12 bzw. die Einschnürung 20 vor der in Aufschieberichtung A vorderen Nut 13 in Axialrichtung kürzer bemessen als der Abstützbereich 12 bzw. die Einschnürung 20 vor der in Aufschieberichtung A nachfolgenden bzw. hinteren Nut 13. Dies führt dazu, dass der Abstand b, wie schon beschrieben, etwas größer als der Abstand a bemessen ist. Andererseits sind in dem gewählten Beispiel die beiden O-Ringe 14 jeweils praktisch gleich weit von der Symmetrielinie S der zugeordneten Profilaussparung 16 des Profilbereichs 17 beabstandet. Die in Aufschieberichtung A hinterste Pressrippe 22 trifft zufolge des Versatzes d zwischen ihrer Mittellinie M und der Symmetrielinie S der zugeordneten Profilaussparung 16 darin auf einen zu der Nut 13 hin ansteigenden Profilbereich.

Zur Herstellung der Pressverbindung dient ein Presswerkzeug, von dem in den Figuren 1 bis 4 nur die, an sich bekannten, Pressbacken 2 dargestellt sind. In dem gezeigten Ausführungsbeispiel besitzen diese drei im Querschnitt trapezförmige Pressrippen 22, die in Umfangsrichtung verlaufen. In Axialrichtung x-x beträgt deren Breite an dem verjüngten (radial inneren) Ende 23 etwa ein Zehntel der Breite der Profilaussparungen 16. Die Mitten benachbarter Pressrippen 22 sind gleichmäßig um den Abstand c beabstandet, wobei der Abstand c in dem Beispiel auch dem erläuterten Abstand a entspricht. Die Hülse 7 weist an ihrem Außenmantel zwei als Ausrichthilfsmittel dienende Vorsprünge 24, 25 auf, deren Zwischenabstand an die axiale Erstreckung der Pressbacken 2 zu deren formschlüssigen Aufnahme und dadurch axialen Ausrichtung angepasst ist. Zufolge der gewählten Positionierung der Pressrippen 22 an den Pressbacken 2, der beschriebenen axialen Ausrichtung der Pressbacken 2 an der Presshülse 7 und der ebenfalls schon beschriebenen axialen Ausrichtung der Presshülse 7 gegen den Anschlag 9 der Hülse 1 wird in Axialrichtung x- x eine Ausrichtung der Pressrippen 22 zu der Hülse 1 erreicht, bei der die Pressrippen 22 mit ihrem radial inneren Ende 23 in Überdeckung zu je einer Profilaussparung 16, 16' treten. In weiterer Einzelheit ist die Ausrichtung derart, dass die in Aufschieberichtung erste Pressrippe 22 mit der Zusatz-Profilaussparung 16' und die in Aufschieberichtung A zweite, d. h. mittlere Pressrippe 22 mit der zugeordneten Profilaussparung 16 jeweils mittig in Überdeckung tritt. Demgegenüber trifft die in Aufschieberichtung A dritte bzw. hinterste Pressrippe 22 auf die ihr zugeordnete Profilaussparung 16 mit einem axialen Mittenversatz d, der ausgehend von dem Muldenscheitel in Richtung zu der benachbarten Nut 13 gerichtet ist.

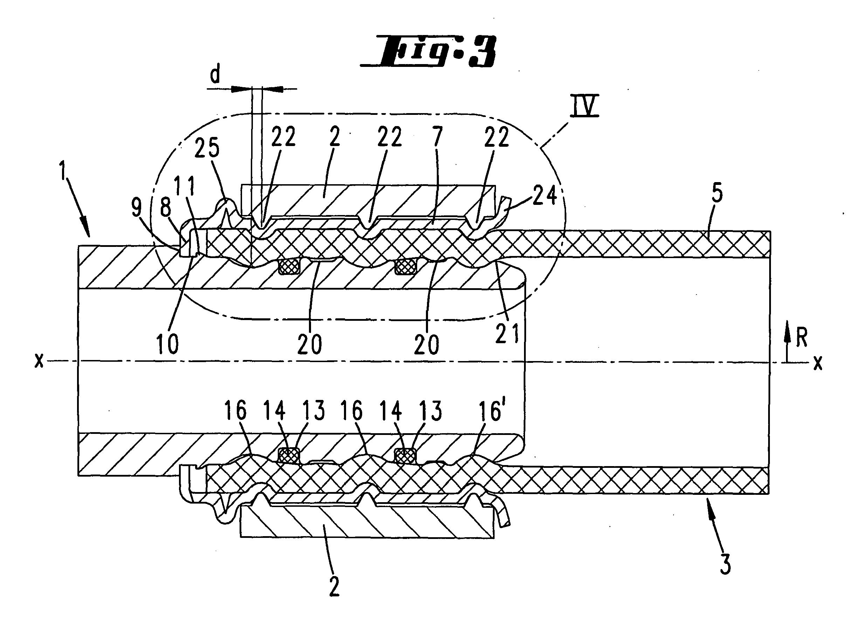

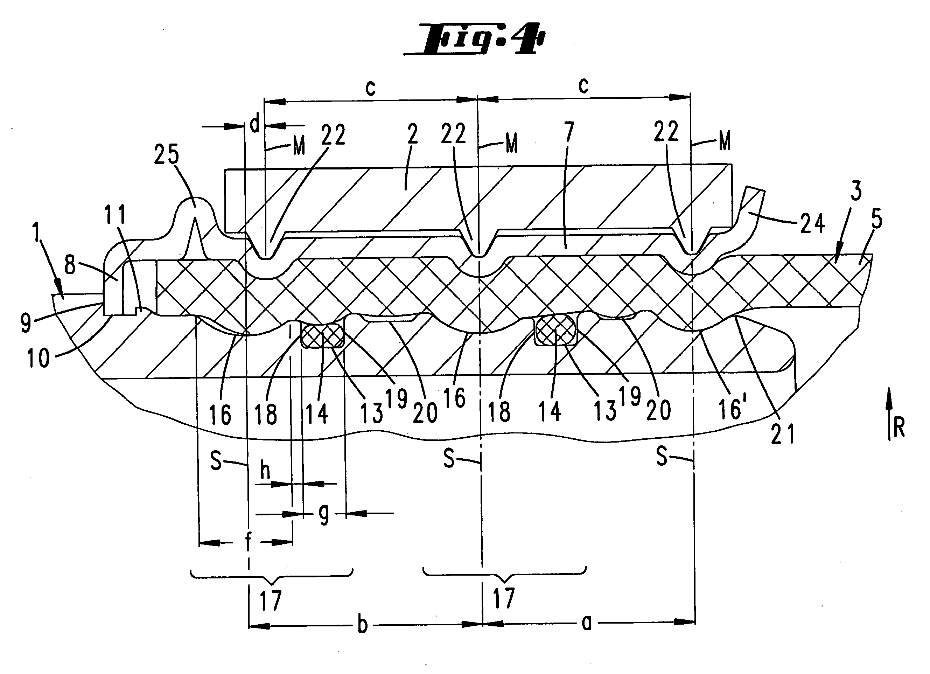

Die Figuren 3 und 4 zeigen den verpressten Zustand, wobei das wie in den Figuren 1 und 2 vorgesehene Verbundrohr 3 zur besseren Übersicht im Vergleich zu den Figuren 1 und 2 in einer vereinheitlichten Schraffur dargestellt ist. Dabei sind die Pressbacken 2 durch das (ansonsten nicht dargestellte) Presswerkzeug um ein gewisses Maß nach radial innen, d. h. in Richtung auf die Mittelachse x -x, verlagert worden, wobei diese radiale Verlagerung für die drei Pressrippen 22 jeweils gleich ist. Beim Verpressvorgang dringen die Pressrippen 22 bereichsweise in die Presshülse 7 ein und verformen diese bereichsweise rillenförmig nach innen. Die in der Hülse 7 so gebildeten Wulste dringen ihrerseits nach radial innen in die Wandung des Rohres 3 ein, das dadurch seinerseits bereichsweise nach radial innen in die Profilaussparungen 16, 16' eingedrückt wird. Die dabei stattfindenden Verformungsvorgänge sind nicht auf die Profilaussparungen 16,16' begrenzt, sondern setzen sich unter Ausfüllung der zunächst auch in den axialen Zwischenbereichen 15 vorhandenen Freiräume auch bis zu den Nuten 13 und den hierin einliegenden Dichtungen 14 fort. Die Profiltiefe der in Aufschieberichtung A ersten segmentförmigen Profilaussparung 16' ist so tief, dass, wenn die Pressrippe 22 die Presshülse 7 und das Rohr 3 verformt, in dem durch die Mittellinie M der Pressrippe 22 und die Symmetrielinie S der Profilaussparung 16 gebildeten Querschnitt der Abstand zwischen dem Presshülseninnendurchmesser und der Zusatz-Profilaussparung 16' (je nach konkreter Bemessung) gleich oder maximal 15 % kleiner ist als die Wanddicke w des Rohres 3 im unverformten, in den Figuren 1 und 2 gezeigten Zustand. Gleiches gilt für die Verformung des Rohres 3 durch die in Aufschieberichtung A zweite Pressrippe 22, deren Mittellinie M ebenfalls mit der Symmetrielinie S der mittleren Profilaussparung 16 zusammenfällt. Anders ist die Situation an der in Aufschieberichtung dritten Pressrippe 22. Diese ist zur Symmetrielinie bzw. zum Muldenscheitel der dritten segmentförmigen Profilaussparung 16 um den Versatz d in Richtung der zweiten O-Ringnut 13, d. h. entgegen der Aufschieberichtung, versetzt. Der Versatz ist so groß, dass in dem von der Mittellinie M vorgegebenen Querschnitt im verpressten Zustand der Abstand zwischen dem Presshülseninnendurchmesser und der in Aufschieberichtung dritten Profilaussparung 16 je nach genauer Bemessung zwischen 20 % und 25 % kleiner als die unverformte Wanddicke 1 des Rohres 3 ist und somit auch eine stärkere Verpressung des in Aufschieberichtung A zweiten O-Ringes 14 im Vergleich zu dem in Aufschieberichtung A ersten O-Ring 14 erfolgt. Die diesbezügliche zeichnerische Darstellung ist allerdings insofern nicht maßstabsgerecht. Dadurch, dass die in Aufschieberichtung A letzte Pressrippe 22 im Vergleich zu den anderen Pressrippen 22 in der Profilaussparung 16 auf einen Querschnitt geringerer Muldentiefe trifft, wird - angesichts gleicher radialer Zustellung der Pressrippen 22 - dort die Rohrwand stärker gestaucht, was über die resultierende Verformung benachbarter Wandbereiche auch zu einer vergleichsweise stärkeren Stauchung der Dichtung führt. Dies ist in Figur 4 qualitativ angedeutet.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Hülse, insbesondere Pressfitting, wobei die Hülse mindestens zwei umlaufende Nuten zur Aufnahme je einer Dichtung und zumindest zwei Abstützbereiche zur radialen Abstützung eines darauf befestigbaren Hohlelements aufweist, wobei benachbart zu zumindest zwei Nuten (13) je eine von der Nut (13) durch einen axialen Zwischenbereich (15) beabstandete Profilaussparung (16) vorgesehen ist, wobei in Bezug auf zumindest zwei Profilbereiche (17), die je eine Nut (13), einen Zwischenbereich (15) und eine Profilaussparung (16) aufweisen, jeweils die größte radiale Erstreckung des Zwischenbereichs (15) größer als die kleinste radiale Erstreckung der Profilaussparung (16) und kleiner als die größte radiale Erstreckung der Abstützbereiche (12) ist, wobei zumindest zwei Profilbereiche (17) ein zueinander gleiches oder im Wesentlichen gleiches Profil aufweisen, wobei zusätzlich zu diesen zumindest zwei Profilbereichen auf der den Profilaussparungen (16) der Profilbereiche (17) abgewandten Seite einer Nut (13) eine Zusatz-Profilaussparung (16') vorgesehen ist, welche in Aufschieberichtung (A) eines an der Hülse (1) zu befestigenden Hohlelementes (3) insbesondere die erste Profilaussparung (16') ist, wobei an den beiden Nuten (13) eine Seitenwand (18) der Nut (13) in einen axialen Zwischenbereich (15) und die andere Seitenwand (19) der Nut (13) in einen Abstützbereich (12) übergeht, und wobei der an die eine Seitenwand (19) der Nut (13) angrenzende Abstützbereich (12) in einem axialen Mittenbereich eine radiale Einschnürung (20) aufweist, deren radiale Erstreckung insbesondere größer als die geringste radiale Erstreckung der Profilaussparung (16) ist, **dadurch gekennzeichnet, dass** ein erster axialer Abstand (a), insbesondere ein erster axialer Mittenabstand, zwischen der Zusatz-. Profilaussparung (16') und einer benachbarten Profilaussparung (16) eines Profilbereichs (17) abweicht von einem zweiten axialen Mittenabstand (b) zwischen zwei Profilaussparungen (16) benachbarter Profilbereiche (17), wobei insbesondere der zweite Mittenabstand (b) größer, insbesondere um etwa 10 Prozent größer, als der erste Mittenabstand (a) ist.

2. Hülse nach Anspruch 1, **dadurch gekennzeichnet, dass** die axialen Zwischenbereiche (15) zumindest zweier Profilbereiche (17) unterschiedlich große maximale radiale Erstreckungen aufweisen, wobei diese radialen Erstreckungen jeweils kleiner als die maximale radiale Erstreckung eines Abstützbereichs (12) sind.

3. Hülse nach einem oder mehreren der vorangehenden Ansprüche, **dadurch gekennzeichnet, dass** zusätzlich zu zumindest zwei Profilbereichen (17), die je eine Nut (13), einen Zwischenbereich (15) und eine Profilaussparung (16) aufweisen, auf der den Profilaussparungen (16) der Profilbereiche (17) abgewandten Seite einer Nut (13) eine Zusatz-Profilaussparung (16') vorgesehen ist, dass sich die Zusatz-Profilaussparung (16') an dem in Aufschieberichtung (A) eines Hohlelements (3) vorderen Ende bis zu einer Profilerhöhung (21) verengt, deren radiale Erstreckung insbesondere gleich oder im Wesentlichen gleich der radialen Erstreckung der Einschnürung (20) ist.

4. Hülse nach einem oder mehreren der vorangehenden Ansprüche, **dadurch gekennzeichnet, dass** die Profilaussparung (16) quer zur Umfangsrichtung einen gerundeten Bodenverlauf mit zu den Rändern abnehmender Tiefe (T) aufweist.

5. Hülse nach einem oder mehreren der vorangehenden Ansprüche, **dadurch gekennzeichnet, dass** die Profilaussparung (16) so breit oder breiter als die Nut (13) ist und/oder dass die Tiefe der Nut (13) das 1,5- bis 2-Fache der maximalen Tiefe der Profilaussparung (16) beträgt.

6. Kombination einer Hülse, insbesondere eines Pressfittings, mit einem Pressbacken aufweisenden Presswerkzeug, wobei die Hülse mindestens zwei umlaufende Nuten (13) zur Aufnahme je eines Dichtungsringes (14) und zumindest einen Abstützbereich (12) zur radialen Abstützung eines darauf befestigbaren Hohlelements aufweist und wobei an den Pressbacken im Pressbereich mindestens zwei in Umfangsrichtung orientierte Pressrippen (22) ausgebildet sind, wobei an der Hülse benachbart zu zumindest zwei Nuten (13) je eine von der Nut (13) durch einen axialen Zwischenbereich (15) beabstandete Profilaussparung (16) vorgesehen ist, wobei in Bezug auf zumindest zwei Profilbereiche (17), die je eine Nut (13), einen Zwischenbereich (15) und eine Profilaussparung (16) aufweisen, jeweils die größte radiale Erstreckung des Zwischenbereichs (15) größer als die kleinste radiale Erstreckung der Profilaussparung (16) und kleiner als die größte radiale Erstreckung des Abstützbereiches (12) ist, und wobei die axiale Breite (e) des Pressrippenquerschnitts zumindest am radial inneren Ende (23) kleiner als die axiale Breite (f) der Profilaussparung (16) ist und wobei Ausrichthilfsmittel (24, 25) vorgesehen sind zur axialen Lagezuordnung von Pressbacken (2) und Hülse (1) derart, dass zumindest zwei Pressrippen (22) zumindest mit ihrem radial inneren Ende (23) jeweils in axiale Überdeckung zu je einer Profilaussparung (16) treten, **dadurch gekennzeichnet, dass** der axiale Mittenabstand (c) zwischen zumindest zwei benachbarten Pressrippen (22) abweicht von dem axialen Mittenabstand (b) von zumindest zwei Profilaussparungen (16) zweier Profilbereiche (17) der Hülse (1).

7. Kombination nach Anspruch 6, **dadurch gekennzeichnet, dass** die axiale Ausrichtung von Presswerkzeug zu Hülse (1) derart ist, dass eine Pressrippe (22) mittig zu einer Profilaussparung (16) und eine zweite Pressrippe (22) außermittig zu einer Profilaussparung (16) mit dem radial inneren Ende (23) in Überdeckung tritt.

8. Kombination nach Anspruch 7, **dadurch gekennzeichnet, dass** die weitere Pressrippe (22) auf die zugeordnete Profilaussparung (16) mit einem axialen Mittenversatz (d) trifft, der ausgehend von der Mitte der Profilaussparung (16) in Richtung zu der Nut (13) des Profilbereichs (17) gerichtet ist.

9. Kombination nach einem oder mehreren der vorangehenden Ansprüche 7 bis 8, **dadurch gekennzeichnet, dass** die axiale Erstreckung des Mittenversatzes (d) etwa ein Fünftel der Breite (f) der Profilaussparung (16) und/ oder etwa die Hälfte der Nutbreite (g) und/oder etwa das Doppelte der Breite (h) des axialen Zwischenbereiches beträgt.

10. Kombination nach einem oder mehreren der vorangehenden Ansprüche 6 bis 9, **dadurch gekennzeichnet, dass** das Presswerkzeug eine Pressrippe (22) aufweist, die zufolge der axialen Ausrichtung der Pressbacken (2) mittig mit einer Zusatz-Profilaussparung (16'), welche zusätzlich zu zumindest zwei Profilbereichen (17), die je eine Nut (13), einen Zwischenbereich (15) und eine Profilaussparung (16) aufweisen, auf der den Profilaussparungen (16) der Profilbereiche (17) abgewandten Seite einer Nut (13) vorgesehen ist, in Überdeckung tritt.

11. Kombination nach Anspruch 10, **dadurch gekennzeichnet, dass** jeweils benachbarte Pressrippen (22) gleichen axialen Mittenabstand (c) besitzen und dass dieser Mittenabstand (c) gleich dem axialen Mittenabstand (a) zwischen der Zusatz-Profilaussparung (16') und einer dazu benachbarten Profilaussparung (16) eines Profilbereiches (17) ist.

12. Kombination nach einem oder mehreren der vorangehenden Ansprüche 6 bis 11, **dadurch gekennzeichnet, dass** die radiale Bauhöhe (k) der Pressrippen (22) etwa gleich oder etwas größer als die Differenz zwischen der kleinsten radialen Erstreckung der Profilaussparungen (16) und der größten radialen Erstreckung des Abstützbereiches (12) ist.

13. Kombination nach einem oder mehreren der vorangehenden Ansprüche 6 bis 12, **dadurch gekennzeichnet, dass** eine Presshülse (7) vorgesehen ist, die einen in Aufschieberichtung (A) vorderen Bund (8) zur formschlüssigen Anlage an einem Absatz (9) der Hülse (1) aufweist und die an ihrem Außenmantel zumindest zwei Vorsprünge (24, 25) aufweist, deren Zwischenabstand an die Breite der Pressbacken (2) zur axialen Ausrichtung angepasst ist.

14. Kombination nach einem oder mehreren der vorangehenden Ansprüche 6 bis 13, **dadurch gekennzeichnet, dass** der radiale Abstand zwischen der Innenwandfläche der unverpressten Presshülse (7) und dem Abstützbereich (12) zur Aufnahme eines Hohlelements (3), wie insbesondere eines Aluminium-Verbundrohres oder eines Kunststoffrohres, von etwa entsprechender Wandstärke (w) so bemessen und derart auf das Presswerkzeug abgestimmt ist, dass die Wandstärke (w) des Hohlelements (3) beim Verpressvorgang im Bereich der außermittig auf die Profilaussparung (16) treffenden Pressrippe (22) vergleichsweise stärker, insbesondere um etwa 20 bis 25 Prozent, und im Bereich der mittig auf die Profilaussparung treffenden Pressrippe vergleichsweise weniger, insbesondere um maximal etwa 15 Prozent, in Radialrichtung (R) gestaucht wird.

## Claims

1. A sleeve, in particular a press fitting, the sleeve having at least two circumferential grooves, each for accommodating a respective seal, and having at least two support regions for radial support of a hollow element which can be secured to the sleeve, a respective profiled recess (16) being provided adjacent to each of at least two grooves (13), each recess (16) being spaced apart from the respective groove (13) by an axial intermediate region (15), each of at least two profiled regions (17) having a groove (13), an intermediate region (15) and a profiled recess (16), and the greatest radial dimension of the intermediate region (15) for each of the at least two profiled regions (17) being greater than the smallest radial dimension of the profiled recess (16) and smaller than the greatest radial dimension of the support regions (12), at least two profiled regions (17) having a profile which is the same, or substantially the same, for both of them, an additional profiled recess (16') being provided, in addition to these at least two profiled regions, to the other side of a groove (13) from the profiled recesses (16) of the profiled region (17), which additional profiled recess (16') is in particular the first profiled recess (16') encountered in the direction (A) in which a hollow element (3) to be secured to the sleeve (1) is pushed onto the sleeve, one side wall (18) of each of the two grooves (13) merging into an axial intermediate region (15) and the other side wall (19) of each of the two grooves (13) merging into a support region (12), and the support region (12) that borders on the one side wall (19) of the groove (13) having, in an axially central region, a portion (20) of reduced radial dimension, the radial dimension of which is in particular greater than the smallest radial dimension of the profiled recess (16), **characterized in that** a first axial spacing (a), in particular a first axial centre-to-centre spacing between the additional profiled recess (16') and a neighbouring profiled recess (16) of a profiled region (17), is different from a second axial centre-to-centre spacing (b) between two profiled recesses (16) of neighbouring profiled regions (17), the second centre-to-centre spacing (b) being in particular greater than the first centre-to-centre spacing (a), and being in particular greater by approximately 10%.

2. A sleeve according to Claim 1, **characterized in that** the axial intermediate regions (15) of at least two profiled regions (17) have maximum radial dimensions of different sizes, these radial dimensions being in each case less than the maximum radial dimension of a support region (12).

3. A sleeve according to one or more of the preceding claims, **characterized in that** in addition to at least two profiled regions (17), each of which has a groove (13), an intermediate region (15) and a profiled recess (16), an additional profiled recess (16') is provided to the other side of a groove (13) from the profiled recesses (16) of the profiled region (17), **in that** the additional profiled recess (16') rises to a profiled ridge (21) at the end first encountered in the push-on direction (A) of a hollow element (3), the radial dimension of the profiled ridge being in particular the same, or substantially the same, as the radial dimension of the portion (20) of reduced radial dimension.

4. A sleeve according to one or more of the preceding claims, **characterized in that** the profiled recess (16) has a rounded base extending in a direction transverse to the circumferential direction, with a depth (T) that decreases towards the edges.

5. A sleeve according to one or more of the preceding claims, **characterized in that** the profiled recess (16) is as wide as, or wider than, the groove (13) and/or that the depth of the groove (13) is 1.5 times to twice the maximum depth of the profiled recess (16).

6. A combination of a sleeve, in particular a press fitting, and a pressing tool having a pressing jaw, the sleeve having at least two circumferential grooves (13), each for accommodating a respective sealing ring (14), and having at least one support region (12) for radial support of a hollow element which can be secured to the sleeve, and at least two pressing ribs (22) oriented in the circumferential direction being formed on the pressing jaws in the pressing region, a respective profiled recess (16) being provided on the sleeve adjacent to each of at least two grooves (13), each recess (16) being spaced apart from the respective groove (13) by an axial intermediate region (15), each of at least two profiled regions (17) having a groove (13), an intermediate region (15) and a profiled recess (16), and the greatest radial dimension of the intermediate region (15) for each of the at least two profiled regions (17) being greater than the smallest radial dimension of the profiled recess (16) and smaller than the greatest radial dimension of the support region (12), and the axial width (e) of the cross-section of the pressing ribs, at least at the radially inner end (23), being less than the axial width (f) of the profiled recess (16), and auxiliary alignment means (24, 25) being provided for axial positional coordination of pressing jaw (2) and sleeve (1) in such a way that at least the radially inner end (23) of each of at least two pressing ribs (22) comes in each case into axial overlap with a respective profiled recess (16), **characterized in that** the axial centre-to-centre spacing (c) between at least two neighbouring pressing ribs (22) is different from the axial centre-to-centre spacing (b) of at least two profiled recesses (16) of two profiled regions (17) of the sleeve (1).

7. A combination according to Claim 6, **characterized in that** the axial alignment of the pressing tool to sleeve (1) is such that the radially inner end (23) of one pressing rib (22) comes into central overlap with respect to a profiled recess (16) and the radially inner end (23) of a second pressing rib (22) comes into off-centre overlap with respect to a profiled recess (16).

8. A combination according to Claim 7, **characterized in that** the second pressing rib (22) acts on the associated profiled recess (16) with an axial offset (d) from the centre of said profiled recess, the offset being in the direction of the groove (13) of the profiled region (17), starting from the centre of the profiled recess (16).

9. A combination according to one or both of the preceding Claims 7 and 8, **characterized in that** the axial extent of the offset (d) from the centre is approximately one-fifth of the width (f) of the profiled recess (16) and/or approximately half of the width (g) of the groove and/or approximately twice the width (h) of the axial intermediate region.

10. A combination according to one or more of the preceding Claims 6 to 9, **characterized in that** the pressing tool has a pressing rib (22) which, as a result of the axial alignment of the pressing jaws (2), enters into central overlap with an additional profiled recess (16'), the additional recess (16') being provided, in addition to at least two profiled regions (17), each of which has a groove (13), an intermediate region (15) and a profiled recess (16), to the other side of a groove (13) from the profiled recesses (16) of the profiled regions (17).

11. A combination according to Claim 10, **characterized in that** neighbouring pressing ribs (22) have in each case the same axial centre-to-centre spacing (c) and that this centre-to-centre spacing (c) is the same as the axial centre-to-centre spacing (a) between the additional profiled recess (16') and a profiled recess (16) of a profiled region (17), said profiled recess neighbouring the additional profiled recess (16').

12. A combination according to one or more of the preceding Claims 6 to 11, **characterized in that** the radial height (k) of the pressing ribs (22) is substantially the same as, or somewhat greater than, the difference between the smallest radial dimension of the profiled recesses (16) and the greatest radial dimension of the support region (12).

13. A combination according to one or more of the preceding Claims 6 to 12, **characterized in that** a pressing sleeve (7) is provided, which has a collar (8) that is leading in the push-on direction (A), for positive abutment at a step (9) of the sleeve (1), and has at least two projections (24, 25) on its outer surface, the spacing between the projections being adapted to the width of the pressing jaws (2) for axial alignment.

14. A combination according to one or more of the preceding Claims 6 to 13, **characterized in that** the radial spacing between the inner wall surface of the unpressed pressing sleeve (7) and the support region (12) for accommodating a hollow element (3) of more or less corresponding wall thickness (w), such as in particular an aluminium connecting tube or a plastics pipe, is dimensioned and adapted to the pressing tool so that and in such a way that the wall thickness (w) of the hollow element (3), during a pressing operation, is compressed, in the radial direction (R), in the region of the pressing rib (22) that acts off-centre on the profiled recess (16) to a comparatively greater extent, in particular by approximately 20 to 25%, and, in the region of the pressing rib that acts centrally on the profiled recess, to a comparatively lesser extent, in particular up to a maximum of about 15%.

## Revendications

1. Manchon, en particulier ajustement serré, dans lequel le manchon présente au moins deux rainures périphériques servant à recevoir chacune un joint et au moins deux zones d'appui servant à supporter radialement un élément creux pouvant être fixé sur celles-ci, dans lequel il est prévu de manière adjacente à au moins deux rainures (13), respectivement un évidement de profilé (16) espacé de la rainure (13) par une zone intermédiaire axiale (15), dans lequel en se rapportant à au moins deux zones de profilé (17) qui présentent chacune une rainure (13), une zone intermédiaire (15) et un évidement de profilé (16), respectivement l'extension radiale la plus grande de la zone intermédiaire (15) est plus grande que l'extension radiale la plus petite de l'évidement de profilé (16) et plus petite que l'extension radiale la plus grande des zones d'appui (12), dans lequel au moins deux zones de profilé (17) présentent un profil identique ou essentiellement identique l'un à l'autre, dans lequel il est prévu en plus de ces au moins deux zones de profilé sur le côté d'une rainure (13) opposé aux évidements de profilé (16) des zones de profilé (17), un évidement de profilé supplémentaire (16'), qui est en particulier le premier évidement de profilé (16') dans le sens d'enfilage (A) d'un élément creux (3) à fixer sur le manchon (1), dans lequel au niveau des deux rainures (13), une paroi latérale (18) de la rainure (13) se transforme en une zone intermédiaire axiale (15) et l'autre paroi latérale (19) de la rainure (13) se transforme en une zone d'appui (12) et dans lequel la zone d'appui (12) adjacente à l'une des parois latérales (19) de la rainure (13) présente dans une zone médiane axiale, un rétrécissement radial (20), dont l'extension radiale est en particulier plus grande que l'extension radiale la plus petite de l'évidement de profilé (16), **caractérisé en ce qu'**une première distance axiale (a), en particulier une première distance de centre à centre axiale, entre l'évidement de profilé supplémentaire (16') et un évidement de profilé (16) adjacent d'une zone de profilé (17) diverge d'une deuxième distance de centre à centre axiale (b) entre deux évidements de profilé (16) de zones de profilé (17) adjacentes, dans lequel en particulier la deuxième distance de centre à centre (b) est plus grande, en particulier d'environ 10 pour cent, que la première distance de centre à centre (a).

2. Manchon selon la revendication 1, **caractérisé en ce que** les zones intermédiaires axiales (15) d'au moins deux zones de profilé (17) présentent des extensions radiales maximales de taille différente, ces extensions radiales étant respectivement plus petites que l'extension radiale maximale d'une zone d'appui (12).

3. Manchon selon une ou plusieurs des revendications précédentes, **caractérisé en ce que**, en plus des au moins deux zones de profilé (17) qui présentent chacune une rainure (13), une zone intermédiaire (15) et un évidement de profilé (16), il est prévu un évidement de profilé supplémentaire (16'), sur le côté d'une rainure (13) opposé aux évidements de profilé (16) des zones de profilé (17), **en ce que** l'évidement de profilé supplémentaire (16') se rétrécit au niveau de l'extrémité avant dans le sens d'enfilage (A) d'un élément creux (3) jusqu'à une élévation du profilé (21) dont l'extension radiale est en particulier égale ou essentiellement égale à l'extension radiale du rétrécissement (20).

4. Manchon selon une ou plusieurs des revendications précédentes, **caractérisé en ce que** l'évidement de profilé (16) présente transversalement au sens périphérique, une allure de fond arrondie avec une profondeur (T) diminuant vers les bords.

5. Manchon selon une ou plusieurs des revendications précédentes, **caractérisé en ce que** l'évidement de profilé (16) est aussi large ou plus large que la rainure (13) et/ou que la profondeur de la rainure (13) est égale à 1,5 à 2 fois la profondeur maximale de l'évidement de profilé (16).

6. Combinaison d'un manchon, en particulier d'un ajustement serré, avec un outil de moulage par compression présentant une mâchoire, dans lequel le manchon présente au moins deux rainures périphériques (13) servant à recevoir chacune une bague d'étanchéité (14) et au moins une zone d'appui (12) servant à supporter radialement un élément creux pouvant être fixé sur celle-ci, et dans lequel au moins deux nervures de compression (22) orientées dans le sens périphérique sont réalisées au niveau des mâchoires dans la zone de compression, dans lequel il est prévu au niveau du manchon de manière adjacente à au moins deux rainures (13), respectivement un évidement de profilé (16) espacé de la rainure (13) par une zone intermédiaire axiale (15), dans lequel en se rapportant à au moins deux zones de profilé (17) qui présentent chacune une rainure (13), une zone intermédiaire (15) et un évidement de profilé (16), respectivement l'extension radiale la plus grande de la zone intermédiaire (15) est plus grande que l'extension radiale la plus petite de l'évidement de profilé (16) et plus petite que l'extension radiale la plus grande de la zone d'appui (12), et dans lequel la largeur axiale (e) de la section transversale de la nervure de compression est, au moins au niveau de l'extrémité radialement interne (23), plus petite que la largeur axiale (f) de l'évidement de profilé (16) et dans lequel des auxiliaires d'orientation (24, 25) sont prévus pour le positionnement axial de la mâchoire (2) et du manchon (1) de telle sorte qu'au moins deux nervures de compression (22) recouvrent axialement, au moins avec leur extrémité radialement interne (23), respectivement un évidement de profilé (16), **caractérisée en ce que** la distance de centre à centre axiale (c) entre au moins deux nervures de compression (22) adjacentes, diverge de la distance de centre à centre axiale (b) d'au moins deux évidements de profilé (16) de deux zones de profilé (17) du manchon (1).

7. Combinaison selon la revendication 6, **caractérisée en ce que** l'orientation axiale de l'outil de moulage par compression par rapport au manchon (1) est telle qu'une nervure de compression (22) recouvre avec l'extrémité radialement interne (23) un évidement de profilé (16) en son milieu et une deuxième nervure de compression (22) recouvre avec l'extrémité radialement interne (23) un évidement de profilé (16) de manière excentrée.

8. Combinaison selon la revendication 7, **caractérisée en ce que** l'autre nervure de compression (22) touche l'évidement de profilé (16) associé avec un déport axial des axes (d), qui est orienté du milieu de l'évidement de profilé (16) vers la rainure (13) de la zone de profilé (17).

9. Combinaison selon une ou plusieurs des revendications précédentes 7 à 8, **caractérisée en ce que** l'extension axiale du déport des axes (d) est égale à peu près à un cinquième de la largeur (f) de l'évidement de profilé (16) et/ou à peu près à la moitié de la largeur de la rainure (g) et/ou à peu près au double de la largeur (h) de la zone intermédiaire axiale.

10. Combinaison selon une ou plusieurs des revendications précédentes 6 à 9, **caractérisée en ce que** l'outil de moulage par compression présente une nervure de compression (22), qui suite à l'orientation axiale des mâchoires (2) recouvre un évidement de profilé supplémentaire (16') en son milieu, qui est prévu en plus des au moins deux zones de profilé (17), qui présentent chacune une rainure (13), une zone intermédiaire (15) et un évidement de profilé (16), sur le côté d'une rainure (13) opposé aux évidements de profilé (16) des zones de profilé (17).

11. Combinaison selon la revendication 10, **caractérisée en ce que** des nervures de compression (22) respectivement adjacentes ont la même distance de centre à centre axiale (c) et **en ce que** cette distance de centre à centre (c) est égale à la distance de centre à centre axiale (a) entre l'évidement de profilé supplémentaire (16') et un évidement de profilé (16) adjacent à celui-ci d'une zone de profilé (17).

12. Combinaison selon une ou plusieurs des revendications précédentes 6 à 11, **caractérisée en ce que** la hauteur radiale (k) des nervures de compression (22) est à peu près égale ou quelque peu supérieure à la différence entre l'extension radiale la plus petite des évidements de profilé (16) et l'extension radiale la plus grande de la zone d'appui (12).

13. Combinaison selon une ou plusieurs des revendications précédentes 6 à 12, **caractérisée en ce qu'**il est prévu un manchon de compression (7), qui présente un bord avant (8) dans le sens d'enfilage (A) pour l'appui par correspondance de forme contre un décrochement (9) du manchon (1) et qui présente au niveau de son enveloppe extérieure, au moins deux saillies (24, 25), dont l'espacement est adapté à la largeur des mâchoires (2) pour l'orientation axiale.

14. Combinaison selon une ou plusieurs des revendications précédentes 6 à 13, **caractérisée en ce que** la distance radiale entre la surface de la paroi intérieure du manchon de compression (7) non comprimé et de la zone d'appui (12) servant à recevoir un élément creux (3), comme en particulier un tube composite aluminium ou un tube plastique, d'une épaisseur de paroi (w) à peu près correspondante, est mesurée et ajustée à l'outil de moulage par compression de telle sorte que l'épaisseur de paroi (w) de l'élément creux (3), lors de la compression au niveau de la nervure de compression (22) touchant l'évidement de profilé (16) de manière excentrique, est comprimée comparativement plus, en particulier d'environ 20 à 25 pour cent, et au niveau de la nervure de compression touchant le milieu de l'évidement de profilé, est comprimée comparativement moins, en particulier d'environ 15 pour cent au maximum, dans le sens radial (R).
